# EUROPEAN PATENT SPECIFICATION

(11) **EP 2 082 003 B1**
(45) Date of publication and mention of the grant of the patent: **27.07.2011**
(21) Application number: 07834801.8
(22) Date of filing: 08.11.2007
(51) Int. Cl.: C09J 5/00, C09J 175/00

(54) **IMPROVED GLUING METHOD**
VERBESSERTES KLEBVERFAHREN
PROCÉDÉ DE COLLAGE PERFECTIONNÉ

(30) Priority: 10.11.2006 NO 20065165
(43) Date of publication of application: 29.07.2009
(73) Proprietor: Dynea OY, 00530 Helsinki (FI)
(72) Inventor: MØRLAND, Einar, 0659 Oslo (NO); KEISER, Marcel, 8840 Einsiedeln (CH)
(74) Representative: Balle, Morten
(86) International application number: PCT/NO2007/000395
(87) International publication number: WO 2008/056992

(56) References cited:
- WO-A-03/044094
- WO-A-2004/104123
- JP-A- 10 058 413
- US-A- 5 643 983

## Description

### Technical field

The present invention relates to an improved method for gluing of wood and wood based products. More specifically, the invention relates to gluing of wood and wood based products by means of EPI (Emulsion-Polymer-Isocyanate) adhesives where a prolonged staple time is requested without resulting in a significant change in the pressing time or the quality of gluing. Most specifically the invention relates to a method for gluing of structural laminated timber, or glulam, using EPI adhesive systems.

### Background

It is known to use EPI adhesives for several application, see e.g. WO 2004/104123 A1. EPI adhesives have been used for decades for gluing of wood, especially in Japan. In addiction to having short hardening time, EPI adhesives are free of formaldehyde.

When producing glulam, finger joints, structural laminated timber, plywood or duo or trio beams, it is important that the glue line satisfies international and / or national requirements with regard to the strength of the glue line, water resistance, boiling resistance etc. At the same time economical and practical issues as the cost for the adhesive, pot life of the adhesive - hardener mixture, are of great importance.

The reactive component (isocyanate) of a EPI adhesive is consumed over time. The pot life is the time from mixing of adhesive and hardener until the adhesive mixture no longer produces a water proof glue line. If too much of the hardener has been consumed before the system is pressurized, the glue line will not become waterproof. Typical pot life for EPI adhesives is, dependent on the adhesive type and the amount of adhesive to be applied, from 10 to 90 minutes, such as from 20 to 60 minutes.

The pressing time is the time the glued substrates are to be under pressure for the glue line to obtain a shear strength that is equal or larger than a given strength requirement measured in Newton (or until the glued product may be handled in the further production line, without affecting the glue line). Different methods for measuring the pressing time are known, and the used method depends on the product to be produced. When the pressing time is long the gluing presses will be occupied for a long time, resulting in a lower productivity than when using short pressing time.

The assembly time is the time from application of the adhesive, until the substrates are pressurized. Most production lines require some handling of the substrates before pressure is applied. The assembly time varies from production line to production line and may be from 5 minutes to 2.5 hours. The assembly time is influenced by several factors as the glue application, temperature, humidity etc. The assembly times in the present description is therefore related to each other using the same parameters.

EPI adhesive has the important technical advantage of very short pressing time at 20°C/65% R.H. Typical pressing time for EPI adhesive may be about 30 minutes at this temperature, whereas the assembly time typically is about 15-20 minutes. Both assembly time and pot life will be significantly reduced at higher temperatures. The short assembly time will often be a limiting factor for many users where the production line requires longer assembly time. These users may not use EPI adhesives without costly reconstruction of the production line.

It is an object of the present invention to provide a method for extending the assembly time during gluing using EPI adhesives, without resulting in undesirable effects on pressing time or the quality of gluing. It is also an object that the method is easy and inexpensive to implement in both a new and an existing production line for gluing of wood based products.

### Short description of the present invention

The objects above are met according to the present invention by a method for gluing of wood or wood based products using EPI (Emulsion-Polymer-Isocyanate) adhesive, where the adhesive is applied to one or both of the surfaces to be glued, the surfaces that are to be glued are joined and the surfaces are forced together until the adhesive is adequately hardened, wherein water is sprayed onto the surface or surfaces onto which adhesive is applied after application of adhesive and before the surfaces are joined, and where the amount of water sprayed on the surface or surfaces onto which adhesive is applied, constitutes from about 2% to about 25% of the applied amount of adhesive. Surprisingly, it has been found that spraying of water onto EPI adhesive shortly after application onto a surface to be glued, will extend the assembly time substantially without resulting in longer pressing time to harden the adhesive, or reduced quality of gluing. Additionally, spraying equipment may easily be included in both a new and an existing production line without major reconstruction thereof.

Preferred amounts of water applied to the surfaces are set in the enclosed dependent claims.

### Short description of the drawing

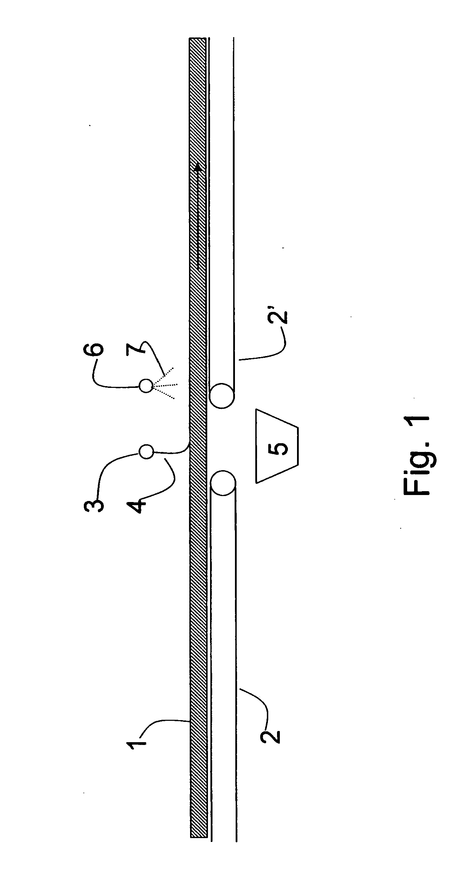

Fig. 1 illustrates a length section of an application device that may be used for the present method.

### Detailed description of the invention

Figure1 illustrates a length section of an application device that may be used in the claimed method. A substrate 1, made of wood or a wood based material, is moved in the direction indicated by an arrow by means of conveyors 2, 2'. Premixed EPI adhesive is applicated by means of an applicator 3 as strings or film 4. A collecting tray 5 is preferably provided below the applicator 3 and the substrate 1 to collect adhesive that is not applied to the substrate. An applicator 3 for application of strings of adhesive to the substrate is a substantially horizontally tube arranged over the substrate across the direction of its movement, the tube being provided with a plurality of downwards directed application nozzles. An applicator 3 for application of a film of adhesive comprises a tube arranged above the substrate and arranged across the direction of movement of the substrate, being provided with a downwards directed longitudinal nozzle. The adhesive applicator 3 is connected to a not shown reservoir for adhesive and a pump to provide the adequate pressure for the application. The adhesive applicator is also fastened to a not shown support or rack.

A water applicator 6 is arranged downstream of the adhesive applicator relative to the direction of movement of the substrate. The water applicator is a substantially horizontal tube arranged over the substrate across the direction of movement of the substrate. The tube of the water applicator is provided with one or more nozzles, depending on the witdh of the substrate, which nozzle(s) is (are) spraying water at the strings or film of adhesive applied to the substrate. The amount of water sprayed onto the surface is dependent on different parameters, such as the ambient temperature, the air humidity, the required assembly time, the characteristics of the substrate etc, and may vary from about 2 % to about 25 % relative to the amount of the applied adhesive. More preferably, the amount of water will be from about 5 % to about 20 %, and even more preferred from about 7% to about 15%.

### Example

A test was performed by spraying about 10 % water relative to the amount of adhesive applied to the substrate. The water was sprayed over a lamella of wood after application of the adhesive.

A standard EPI adhesive, Prefere 6151 / Prefere 6651, was applied in an amount of 250 and 350 g/m², respectively, with and without application of water to the surface of the substrate after application of adhesive. The conditions for the test is summarized in the table below.

| Adhesive system / amount of adhesive: | 250g/m² | 350g/m² |
|---|---|---|
| | Assembly time in minuttes | Assembly time in minuttes |
| Prefere 6151/Prefere 6651 std | 20 | 30 |
| Prefere 6151/6651 sprayed with 10% water | 30 | 45 |

The table illustrates that the assembly time is extended from 20 to 30 minutes by spraying of water onto the adhesive that had been applied in an amount of 250 g/m², corresponding to an extension of time of 50%. Spraying of water onto adhesive applied in an amount of 350 g/m², gave an extension of the assembly time from 30 to 45 minutes, i.e. an extension of time of 50%.

The extension of assembly time for EPI has two advantages for the producer of glued products. Firstly, producers that prior to the invention had to use other adhesive systems due to too short assembly time for EPI adhesives, may now use this adhesive system without having to do major modifications or reconstruction of the production line.

Secondly, for the extended assembly time will give producers already using EPI adhesives an extra margin to the maximal assembly time so that inadequate gluing and/ or rejection of products due to short stops in the production line, may be avoided.

## Claims

1. A method for gluing of wood or wood based products using EPI (Emulsion-Polymer-Isocyanate) adhesive, where the adhesive is applied to one or both of the surfaces to be glued, the surfaces that are to be glued are joined and the surfaces are forced together until the adhesive is adequately hardened, wherein water is sprayed onto the surface or surfaces onto which adhesive is applied after application of adhesive and before the surfaces are joined, and where the amount of water sprayed on the surface or surfaces onto which adhesive is applied, constitutes from 2% to 25% of the applied amount of adhesive.

2. Method according to claim 1, wherein the amount of water constitutes from 5% to 20% of the applied amount of adhesive.

3. Method according to claim 1, wherein the amount of water constitutes from 7% to 15% of the applied amount of adhesive.

4. Method according to claim 1, wherein the amount of water constitutes about 10 % of the applied amount of adhesive.

## Patentansprüche

1. Verfahren zum Kleben von Holz oder von Produkten auf der Grundlage von Holz unter Verwendung von EPI-Klebstoff (Emulsion-Polymer-Isocyanate), wobei der Klebstoff auf eine oder beide der zu klebenden Oberflächen aufgetragen wird, die zu klebenden Oberflächen zusammengeführt werden, und die Oberflächen zusammengepresst werden, bis der Klebstoff hinreichend gehärtet ist, wobei Wasser auf die Oberfläche oder die Oberflächen, auf welche Klebstoff aufgetragen wird, nach dem Auftragen des Klebstoffs und vor dem Zusammenführen der Oberflächen gesprüht wird, und wobei die Wassermenge, welche auf die Oberfläche oder die Oberflächen gesprüht wird, auf welche Klebstoff aufgetragen wird, von 2% bis 25% der an Klebstoff aufgetragenen Menge ausmacht.

2. Verfahren nach Anspruch 1, wobei die Wassermenge von 5% bis 20% der an Klebstoff aufgetragenen Menge ausmacht.

3. Verfahren nach Anspruch 1, wobei die Wassermenge von 7% bis 15% der an Klebstoff aufgetragenen Menge ausmacht.

4. Verfahren nach Anspruch 1, wobei die Wassermenge etwa 10% der an Klebstoff aufgetragenen Menge ausmacht.

## Revendications

1. Procédé de collage de bois ou de produits à base de bois utilisant un adhésif EPI (émulsion-polymère-isocyanate), dans lequel l'adhésif est appliqué sur une surface ou sur les deux surfaces à coller, les surfaces à coller sont réunies et les surfaces sont pressées ensemble jusqu'à ce que l'adhésif ait durci de manière appropriée, de l'eau étant pulvérisée sur la surface sur laquelle ou sur les surfaces sur lesquelles l'adhésif est appliqué après application de l'adhésif et avant que les surfaces soient réunies, et la quantité d'eau pulvérisée sur la surface sur laquelle ou sur les surfaces sur lesquelles l'adhésif est appliqué constitue de 2 % à 25 % de la quantité d'adhésif appliquée.

2. Procédé selon la revendication 1, dans lequel la quantité d'eau constitue de 5 % à 20 % de la quantité d'adhésif appliquée.

3. Procédé selon revendication 1, dans lequel la quantité d'eau constitue de 7 % à 15 % de la quantité d'adhésif appliquée.

4. Procédé selon la revendication 1, dans lequel la quantité d'eau constitue environ 10 % de la quantité d'adhésif appliquée.
